# EUROPEAN PATENT APPLICATION

(11) **EP 4 292 502 A1**
(43) Date of publication of application: **20.12.2023**
(21) Application number: 21925369.7
(22) Date of filing: 09.06.2021
(51) Int. Cl.: A47L 11/40

(54) **CLEANING ROBOT ESCAPE METHOD AND APPARATUS, MEDIUM, AND ELECTRONIC DEVICE**

(30) Priority: 10.02.2021 CN 202110184806
(71) Applicant: Beijing Roborock Innovation Technology Co., Ltd., Beijing 102206 (CN)
(72) Inventor: HOU, Zhengtao, Beijing 102206 (CN)
(74) Representative: Cabinet Beau de Loménie
(86) International application number: PCT/CN2021/099241
(87) International publication number: WO 2022/170715

(57) **Abstract**

A cleaning robot (2000) escape method, a cleaning robot (2000) escape apparatus, a computer readable storage medium, and an electronic device. The method comprises: when a cleaning robot (2000) cleans in a first surface medium region, recording a cleaned path and generating a region map (S2210); when the cleaning robot (2000) encounters an obstacle and turns the direction, in response to a surface medium change signal triggered by a surface medium sensor, upon detecting a second surface medium region, detecting whether the cleaned path of the cleaning robot (2000) is a path along a wall (S2220); and if the cleaned path of the cleaning robot (2000) is the path along the wall, controlling the cleaning robot (2000) to enter a special escape mode (S2230). The method can improve the capability of automatic escape of the cleaning robot (2000), reduce the failure rate of the cleaning robot (2000), and improve user experience.

## Description

### CROSS-REFERENCE TO RELATED APPLICATION

The present disclosure claims priority to Chinese Patent Application No. 202110184806.0, filed on February 10, 2021, and entitled "CLEANING ROBOT EXTRICATION METHOD AND DEVICE, MEDIUM AND ELECTRONIC APPARATUS", which is incorporated herein by reference in its entirety.

### TECHNICAL FIELD

The present disclosure relates to the field of smart homes and, more particularly, to a cleaning robot extrication method, a cleaning robot extrication device, a computer-readable storage medium, and an electronic apparatus.

### BACKGROUND

In recent years, with the rapid development of computer technology and artificial intelligence science, intelligent robot technology has gradually become a hotspot in the research field of modern robots. A ground sweeping robot, as the most practical type of intelligent robot, can automatically clean a ground by means of certain artificial intelligence.

At present, more and more families are laying carpets. When a ground sweeping robot completes cleaning a narrow-gap region between a carpet and a wall and changes its direction, it is prone to getting stuck.

However, there is currently no way to deal with this issue. The ground sweeping robot can only remain in a stuck state or wait for manual intervention.

### BRIEF SUMMARY

According to an aspect of the present disclosure, there is provided a cleaning robot extrication method applied to a cleaning robot including a surface medium sensor. The method includes:
recording a cleaned path and generating a regional map when the cleaning robot cleans within a first surface medium region;
detecting whether the cleaned path of the cleaning robot is a wall-following path in the event that a second surface medium region is detected in response to a surface medium change signal triggered by the surface medium sensor when the cleaning robot encounters an obstacle and changes direction; and
controlling the cleaning robot to enter a special extrication mode if the cleaned path of the cleaning robot is the wall-following path.

In an exemplary embodiment of the present disclosure, the method further includes:
determining whether the cleaned first surface medium region is behind the cleaning robot based on the generated regional map if the cleaned path of the cleaning robot is not the wall-following path; and
entering the special extrication mode if the cleaned first surface medium region is not behind the cleaning robot.

In an exemplary embodiment of the present disclosure, the special extrication mode includes:
controlling the cleaning robot to reverse based on either the wall-following path, the cleaned path, or the cleaned first surface medium region;
making the cleaning robot rotate in place after the cleaning robot reverses a distance equivalent to at least half a length of a body of the cleaning robot; and
if the second surface medium region is detected in response to a surface medium change signal triggered by the surface medium sensor, controlling the cleaning robot to continue to reverse until the surface medium sensor detects no surface medium change signal.

In an exemplary embodiment of the present disclosure, when the surface medium sensor detects no surface medium change signal, the method further includes:
controlling the cleaning robot to exit the special extrication mode.

In an exemplary embodiment of the present disclosure, the wall-following path refers to a path parallel to a surface of a wall when the cleaning robot cleans along the wall.

In an exemplary embodiment of the present disclosure, an angle by which the cleaning robot rotates in place is 15-90 degrees.

In an exemplary embodiment of the present disclosure, the surface medium change signal triggered by the surface medium sensor includes:
controlling the surface medium sensor to emit a signal vertically towards a current surface, and receiving an actual echo signal reflected by the current surface; and
determining whether the actual echo signal is different from an echo signal of the first surface medium region, and if yes, determining that a position of the surface medium sensor is already within the second surface medium region,
wherein the surface medium sensor is an ultrasonic sensor.

In an exemplary embodiment of the present disclosure, the method is used when the cleaning robot is in a mode of cleaning only the first surface medium region.

According to another aspect of the present disclosure, there is provided a cleaning robot extrication device arranged in a cleaning robot including a surface medium sensor. The device includes:
an information recording module configured to record a cleaned path and generate a regional map when the cleaning robot cleans within a first surface medium region;
a path detecting module configured to detect whether the cleaned path of the cleaning robot is a wall-following path in the event that a second surface medium region is detected in response to a surface medium change signal triggered by the surface medium sensor when the cleaning robot encounters an obstacle and changes direction; and
a control module configured to control the cleaning robot to enter a special extrication mode if the cleaned path of the cleaning robot is the wall-following path.

According to still another aspect of the present disclosure, there is provided a computer-readable storage medium having stored thereon a computer program. The computer program, when executed by a processor, implements the cleaning robot extrication method described above.

According to yet still another aspect of the present disclosure, there is provided an electronic apparatus. The electronic apparatus includes:
a processor; and
a memory configured to store processor -executable instructions,
wherein the processor is configured to execute the cleaning robot extrication method described above by executing the executable instructions.

It should be understood that the foregoing general description and the following detailed description are exemplary and illustrative only and are not intended to limit the present disclosure.

### BRIEF DESCRIPTION OF THE DRAWINGS

The accompanying drawings here are incorporated in the Description and constitute a part of the Description, show embodiments conforming to the present disclosure, and are used together with the Description to explain the principles of the present disclosure. Apparently, the accompanying drawings in the following description show only some embodiments of the present disclosure, and a person of ordinary skill in the art may still derive other drawings from these accompanying drawings without creative efforts.
Fig. 1 is an oblique view of an automatic cleaning apparatus according to an embodiment of the present disclosure;
Fig. 2 is a schematic structural diagram of a bottom of an automatic cleaning apparatus according to an embodiment of the present disclosure;
Fig. 3 is an oblique view of a driving wheel assembly on one side according to an embodiment of the present disclosure;
Fig. 4 is a front view of a driving wheel assembly on one side according to an embodiment of the present disclosure;
Fig. 5 is an oblique view of a dust box according to an embodiment of the present disclosure;
Fig. 6 is an oblique view of a blower according to an embodiment of the present disclosure;
Fig. 7 is a schematic diagram of a dust box in an open state according to an embodiment of the present disclosure;
Fig. 8 is a schematic diagram of a dust box and a blower in an assembled state according to an embodiment of the present disclosure;
Fig. 9 is an exploded view of an automatic cleaning apparatus according to an embodiment of the present disclosure;
Fig. 10 is a structural diagram of a supporting platform of an automatic cleaning apparatus according to an embodiment of the present disclosure;
Fig. 11 is a structural diagram of a vibrating member of an automatic cleaning apparatus according to an embodiment of the present disclosure;
Fig. 12 is a schematic diagram of a cleaning head driving mechanism based on a crank slider mechanism according to another embodiment of the present disclosure;
Fig. 13 is a schematic diagram of a cleaning head driving mechanism based on a double-crank mechanism according to another embodiment of the present disclosure;
Fig. 14 is a schematic diagram of a cleaning head driving mechanism based on a crank mechanism according to another embodiment of the present disclosure;
Fig. 15 is a schematic diagram of an automatic cleaning apparatus in a lifting state according to an embodiment of the present disclosure;
Fig. 16 is a schematic diagram of an automatic cleaning apparatus in a lowering state according to an embodiment of the present disclosure;
Fig. 17 is a schematic diagram of a four-link lifting and lowering structure in a lifting state according to an embodiment of the present disclosure;
Fig. 18 is a schematic diagram of a four-link lifting and lowering structure in a lowering state according to an embodiment of the present disclosure;
Fig. 19 shows a diagram of a route of a cleaning robot when cleaning along a wall according to an embodiment of the present disclosure;
Fig. 20 shows a schematic structural diagram of a cleaning robot which jams when cleaning along a wall according to an embodiment of the present disclosure;
Fig. 21 shows a flowchart of a cleaning robot extrication method according to an embodiment of the present disclosure;
Fig. 22 shows a flowchart of execution steps of a cleaning robot extrication method according to an embodiment of the present disclosure;
Fig. 23 shows a waveform diagram of an echo of a surface of a first surface medium region received by an ultrasonic sensor according to an embodiment of the present disclosure;
Fig. 24 shows a waveform diagram of an echo of a surface of a second surface medium region received by an ultrasonic sensor according to an embodiment of the present disclosure;
Fig. 25 shows a block diagram of a cleaning robot extrication device according to an embodiment of the present disclosure;
Fig. 26 shows a schematic diagram of modules of an electronic apparatus according to an embodiment of the present disclosure; and
Fig. 27 shows a schematic diagram of a program product according to an embodiment of the present disclosure.

### DETAILED DESCRIPTION

Exemplary embodiments will now be described more fully with reference to the accompanying drawings. The exemplary embodiments, however, may be implemented in various forms and should not be construed as being limited to examples set forth herein. Rather, these embodiments are provided so that the present disclosure will be thorough and complete, and will fully convey the concept of exemplary embodiments to those skilled in the art. The same reference numerals in the drawings denote the same or similar structures, and thus their detailed descriptions will be omitted.

Although relative terms such as "upper" and "lower" are used in the Description to describe the relative relationship of one component with respect to another component as shown in the figures, these terms are used in this Description only for convenience, for example, based on the exemplary directions shown in the figures. It is to be understood that if a device shown in the figures is turned upside down, the described "upper" component will become a "lower" component. Other relative terms such as "high", "low", "top", "bottom", "left" and "right", also have similar meanings. When a structure is "on" another structure, it may mean that the structure is integrally formed on the other structure, or that the structure is "directly" provided on the another structure, or that the structure is "indirectly" provided on the another structure via still another structure.

The terms "a", "an", and "the" are used to indicate the presence of one or more elements/components, etc. The terms "include" and "have" are used to indicate the meaning including an open-ended inclusion and indicate that there may be other elements/components, etc. in addition to the listed elements/components, etc.

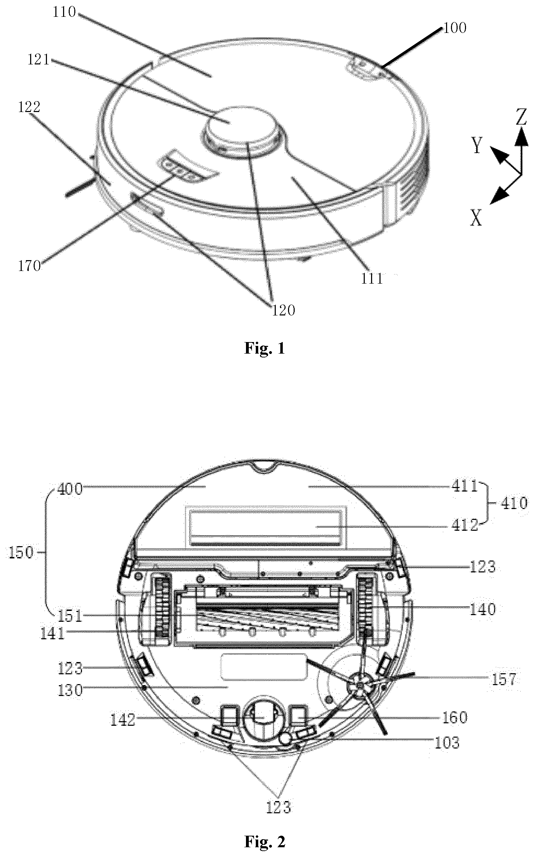

Fig. 1 and Fig. 2 are schematic structural diagrams of an automatic cleaning apparatus according to an exemplary embodiment. As shown in Figs. 1-2, the automatic cleaning apparatus may be a vacuum ground sucking robot, or may be a ground mopping/brushing robot, or may be a window climbing robot, etc. The automatic cleaning apparatus may include a mobile platform 100, a perception system 120, a control system 130, a driving system 140, a cleaning module 150, an energy system 160, and a human-computer interaction system 170.

The mobile platform 100 may be configured to move automatically on an operating surface in a target direction. The operating surface may be a surface to be cleaned by the automatic cleaning apparatus. In some embodiments, the automatic cleaning apparatus may be a ground mopping robot and, thus, the automatic cleaning apparatus operates on a ground, and the ground is the operating surface. The automatic cleaning apparatus may also be a window cleaning robot and, thus, the automatic cleaning apparatus operates on an outer surface of glass of a building, and the glass is the operating surface. The automatic cleaning apparatus may also be a pipe cleaning robot and, thus, the automatic cleaning apparatus operates on an inner surface of a pipe, and the inner surface of the pipe is the operating surface. For explanatory purposes only, the following description in this application takes a ground mopping robot as an example for illustration.

In some embodiments, the mobile platform 100 may be an autonomous mobile platform or a non-autonomous mobile platform. The autonomous mobile platform means that the mobile platform 100 itself can automatically and adaptively make an operational decision based on an unexpected environmental input. The non-autonomous mobile platform means that the mobile platform 100 itself cannot adaptively make an operational decision based on an unexpected environmental input, but can execute a given procedure or operate according to a certain logic. Correspondingly, when the mobile platform 100 is the autonomous mobile platform, the target direction may be determined autonomously by the automatic cleaning apparatus. When the mobile platform 100 is the non-autonomous mobile platform, the target direction may be set systematically and manually. When the mobile platform 100 is the autonomous mobile platform, the mobile platform 100 includes a forward portion 111 and a rearward portion 110.

The perception system 120 includes a position determining device 121 located above the mobile platform 100, a buffer 122 located at the forward portion 111 of the mobile platform 100, a cliff sensor 123 located at a bottom of the mobile platform 100 and sensing devices, such as an ultrasonic sensor (not shown in the figures), an infrared sensor (not shown in the figures), a magnetometer (not shown in the figures), an accelerometer (not shown in the figures), a gyroscope (not shown in the figures), and an odometer (not shown in the figures), for providing various position information and motion state information of the automatic cleaning apparatus to the control system 130.

In order to more clearly describe behaviors of the automatic cleaning apparatus, the following directions are defined: the automatic cleaning apparatus may travel on the ground by various combinations of movements relative to the following three mutually perpendicular axes defined by the mobile platform 100: a transversal axis X, a front and rear axis Y, and a center vertical axis Z. A forward driving direction along the front and rear axis Y is designated as "forward" and a rearward driving direction along the front and rear axis Y is designated as "rearward". The transversal axis X extends substantially between a right wheel and a left wheel of the automatic cleaning apparatus along an axis center defined by a center point of the driving wheel assembly 141. The automatic cleaning apparatus may rotate around the X axis. It is called "pitch up" when the forward portion of the automatic cleaning apparatus is tilted upward and the rearward portion thereof is tilted downward, and it is called "pitch down" when the forward portion of the automatic cleaning apparatus is tilted downward and the rearward portion thereof is tilted upward. In addition, the automatic cleaning apparatus may rotate about the Z axis. In a forward direction of the automatic cleaning apparatus, it is called "turn right" when the automatic cleaning apparatus is tilted to the right of the Y axis, and it is called "turn left" when the automatic cleaning apparatus is tilted to the left of the Y axis.

As shown in Fig. 2, cliff sensors 123 are provided at the bottom of the mobile platform 100 and in front and rear of the driving wheel assembly 141, respectively, for preventing the automatic cleaning apparatus from falling off when the automatic cleaning apparatus reverses, so as to avoid damage to the automatic cleaning apparatus. The aforementioned "front" refers to the side same as a traveling direction of the automatic cleaning apparatus, and the aforementioned "rear" refers to the side opposite to the traveling direction of the automatic cleaning apparatus.

The position determining device 121 includes, but is not limited to, a camera, a laser distance sensor (LDS).

The various components in the perception system 120 may operate independently or operate together to achieve a purpose function more accurately. The surface to be cleaned is identified through the cliff sensor 123 and the ultrasonic sensor to determine physical properties of the surface to be cleaned, including a surface medium, degree of cleanliness, etc., which may be more accurately determined in combination with the camera and the laser distance sensor, etc.

For example, the ultrasonic sensor may determine whether the surface to be cleaned is a carpet. If the ultrasonic sensor determines that the surface to be cleaned is made of a carpet material, the control system 130 controls the automatic cleaning apparatus to perform a carpet mode cleaning.

The forward portion 111 of the mobile platform 100 is provided with the buffer 122. During cleaning, when the driving wheel assembly 141 propels the automatic cleaning apparatus to travel on the ground, the buffer 122 detects one or more events (or objects) in a traveling path of the automatic cleaning apparatus via a sensor system such as an infrared sensor, and the automatic cleaning apparatus may control the driving wheel assembly 141 based on the events (or objects) detected by the buffer 122, such as obstacles and walls, so as to cause the automatic cleaning apparatus to respond to the events (or objects), such as moving away from the obstacles.

The control system 130 is disposed on a main circuit board inside the mobile platform 100, and includes a computing processor, such as a central processing unit and an application processor, that communicate with a non-transitory memory such as a hard disk, a flash memory, and a random-access memory. The application processor is configured to receive environmental information sensed by a plurality of sensors and transmitted from the perception system 120, to draw a simultaneous map of an environment where the automatic cleaning apparatus is located based on obstacle information fed back by the laser distance sensor by use of a positioning algorithm, such as SLAM, to autonomously determine a travelling path based on the environmental information and the environmental map, and then to control the driving system 140 to perform operations such as travelling forward, travelling backward, and/or steering based on the autonomously determined travelling path. Further, the control system 130 may also determine whether to activate the cleaning module 150 to perform a cleaning operation based on the environmental information and the environmental map.

Specifically, the control system 130 may, based on distance information and speed information which are fed back by the buffer 122, the cliff sensor 123 and sensing devices, such as the ultrasonic sensor, the infrared sensor, the magnetometer, the accelerometer, the gyroscope, and the odometer, comprehensively determine a current operating state of the ground sweeping robot, such as crossing a doorsill, getting on a carpet, locating at the edge of a cliff, being stuck from above or below, having a full dust box, being picked up, etc., and will also give a specific next action strategy for different situations, so that the work of the automatic cleaning apparatus meets the owner's requirements and provides better user experience. Further, the control system may plan the most efficient and reasonable cleaning path and cleaning mode based on the simultaneous map drawn by SLAM, which greatly improves the cleaning efficiency of the automatic cleaning apparatus.

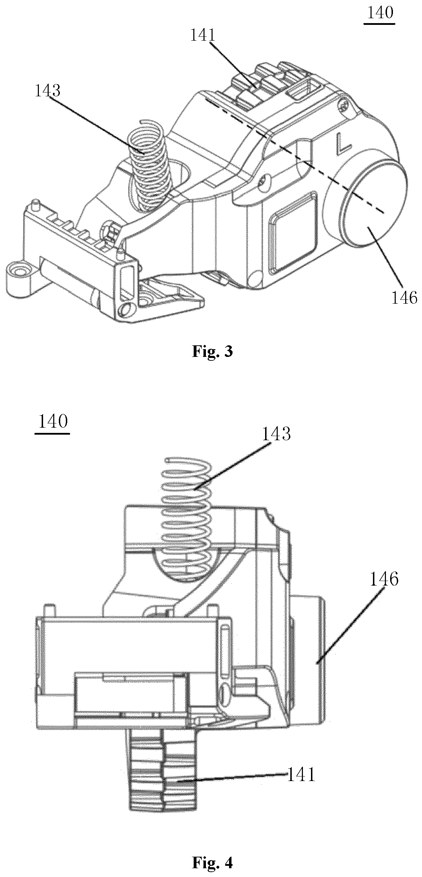

The driving system 140 may execute a driving command based on specific distance and angular information such as x, y, and theta components, so as to manipulate the automatic cleaning apparatus to travel across the ground. Figs. 3 and 4 are an oblique view and a front view of a driving wheel assembly 141 on one side according to an embodiment of the present disclosure, respectively. As shown in the figures, the driving system 140 includes the driving wheel assembly 141, and the driving system 140 may control a left wheel and a right wheel simultaneously. In order to more precisely control the motion of the automatic cleaning apparatus, the driving system 140 preferably includes a left driving wheel assembly and a right driving wheel assembly, respectively. The left driving wheel assembly and the right driving wheel assembly are arranged symmetrically along the transverse axis defined by the mobile platform 100. The driving wheel assembly includes a housing and a connecting frame, and a driving motor 146 is disposed in the driving wheel assembly. The driving motor 146 is located outside the driving wheel assembly 141, and an axis center of the driving motor 146 is located within a cross-sectional projection of the driving wheel assembly, and the driving wheel assembly 141 may also be connected to a circuit for measuring a driving current and an odometer.

In order for the automatic cleaning apparatus to move on the ground more stably or have a higher movement ability, the automatic cleaning apparatus may include one or more steering assemblies 142, and the steering assembly 142 may be a driven wheel or a driving wheel, and structurally includes but is not limited to a universal wheel. The steering assembly 142 may be located in front of the driving wheel assembly 141.

The driving motor 146 provides power for rotation of the driving wheel assembly 141 and/or the steering assembly 142.

The driving wheel assembly 141 may be detachably connected to the mobile platform 100 to facilitate disassembly, assembly, and maintenance. The driving wheel may have an offset drop suspension system which is movably fastened, e.g., rotatably attached, to the mobile platform 100 of the automatic cleaning apparatus, and maintains contact and traction with the ground at a certain grounding force by an elastic element 143 such as a tension spring or a compression spring, and meanwhile, the cleaning module 150 of the automatic cleaning apparatus is also in contact with the surface to be cleaned at a certain pressure.

The energy system 160 includes a rechargeable battery, such as a nickel-hydride battery and a lithium battery. The rechargeable battery may be connected with a charging control circuit, a battery pack charging temperature detecting circuit and a battery undervoltage monitoring circuit; and the charging control circuit, the battery pack charging temperature detecting circuit and the battery undervoltage monitoring circuit are then connected to a single-chip microcomputer control circuit. A host of the automatic cleaning apparatus is connected to a charging pile through a charging electrode disposed on a side of or below a body of the automatic cleaning apparatus for charging. If there is dust on the bare charging electrode, due to an accumulation effect of charges during charging, a plastic body of the automatic cleaning apparatus around the electrode will be melted and deformed and even the electrode itself will be deformed and thus is unable to continue to normally charge the automatic cleaning apparatus.

The human-computer interaction system 170 includes buttons on a panel of the host of the automatic cleaning apparatus, and the buttons are used by a user to select functions. The human-computer interaction system 170 may also include a display screen and/or an indicator light and/or a horn. The display screen, the indicator light and the horn present a current state or function items of the automatic cleaning apparatus to the user. The human-computer interaction system 170 may also include a mobile client program. For a route navigation type cleaning apparatus, the mobile client may present a map of the environment where the apparatus is located, as well as a location of the apparatus to the user, which may provide the user with richer and more user-friendly function items.

The cleaning module 150 may include a dry cleaning module 151 and/or a wet cleaning module 400.

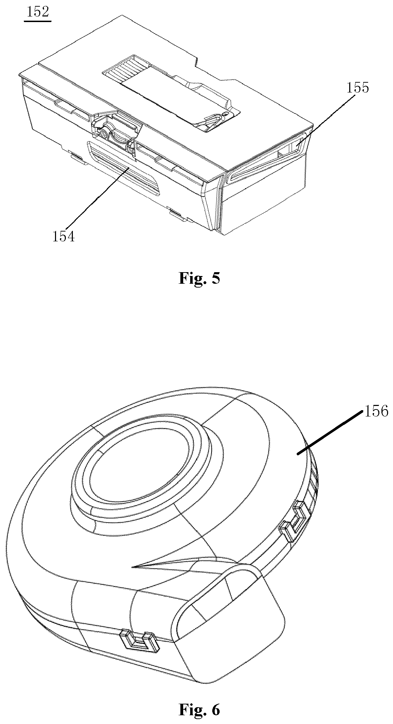

As shown in Figs. 5-8, the dry cleaning module 151 includes a rolling brush, a dust box, a blower, and an air outlet. The rolling brush having a certain interference with the ground sweeps up garbage on the ground, and rolls up the garbage to the front of a dust sucking port between the rolling brush and the dust box and then the garbage is sucked into the dust box by air which has a sucking force, is generated by the blower and passes through the dust box. The dust removal capacity of the ground sweeping robot may be characterized by the dust pickup efficiency (DPU) of the garbage. The DPU is affected by a structure and material of the rolling brush, the utilization rate of air in an air passage formed by the dust sucking port, the dust box, the blower, the air outlet and connecting components among the dust sucking port, the dust box, the blower, the air outlet, and a type and power of the blower, which is a complex system design problem. Compared with an ordinary plug-in vacuum cleaner, for an automatic cleaning apparatus with limited energy, the improvement of dust removal capacity is more meaningful. Because the improvement of the dust removal capacity directly and effectively reduces the demand for energy, that is to say, the original cleaning apparatus that may clean 80 square meters of ground on a single charge may be evolved to clean 180 square meters or more on a single charge. In addition, the service life of the battery having a reduced number of charging times will also be greatly increased, so that the frequency of replacing the battery by the user will be also reduced. What is more intuitive and important is that the improvement of the dust removal capacity is the most apparent and important user experience as the user will directly come to a conclusion about whether the thorough cleaning is achieved. The dry cleaning module may also include a side brush 157 having a rotating shaft angled relative to the ground, for moving debris to a region of the rolling brush of the cleaning module 150.

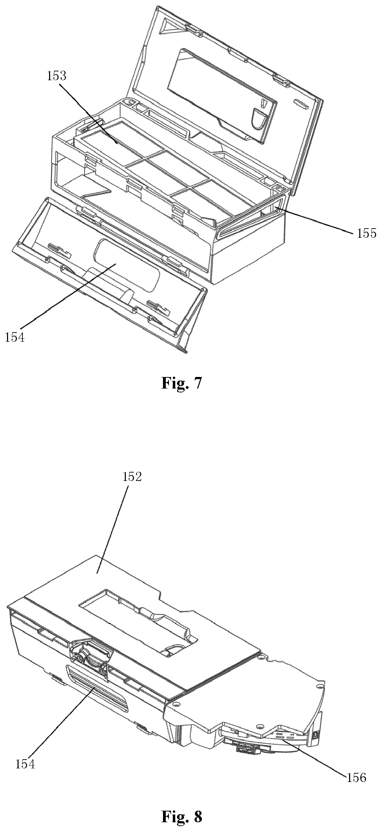

Fig. 5 is a schematic structural diagram of a dust box 152 in the dry cleaning module, Fig. 6 is a schematic structural diagram of a blower 156 in the dry cleaning module, Fig. 7 is a schematic diagram of the dust box 152 in an open state, and Fig. 8 is a schematic diagram of the dust box and the blower in an assembled state.

The rolling brush having a certain interference with the ground sweeps up garbage on the ground and rolls up the garbage to the front of the dust sucking port 154 between the rolling brush and the dust box 152 and then the garbage is sucked into the dust box 152 by the air which has a sucking force, is generated by the blower 156 and passes through the dust box 152. The garbage is isolated by a filtering mesh 153 on an inner side of the dust box 152 close to the dust sucking port 154. The filtering mesh 153 completely isolates the dust sucking port from the air outlet, and the filtered air enters the blower 156 through the air outlet 155.

Typically, the dust sucking port 154 of the dust box 152 is located in front of the automatic cleaning apparatus, the air outlet 155 is located on a side of the dust box 152, and an air sucking port of the blower 156 is docked with the air outlet of the dust box.

A front panel of the dust box 152 may be opened for cleaning garbage within the dust box 152.

The filtering mesh 153 is detachably connected to a body of the dust box 152 to facilitate disassembly, assembly and cleaning.

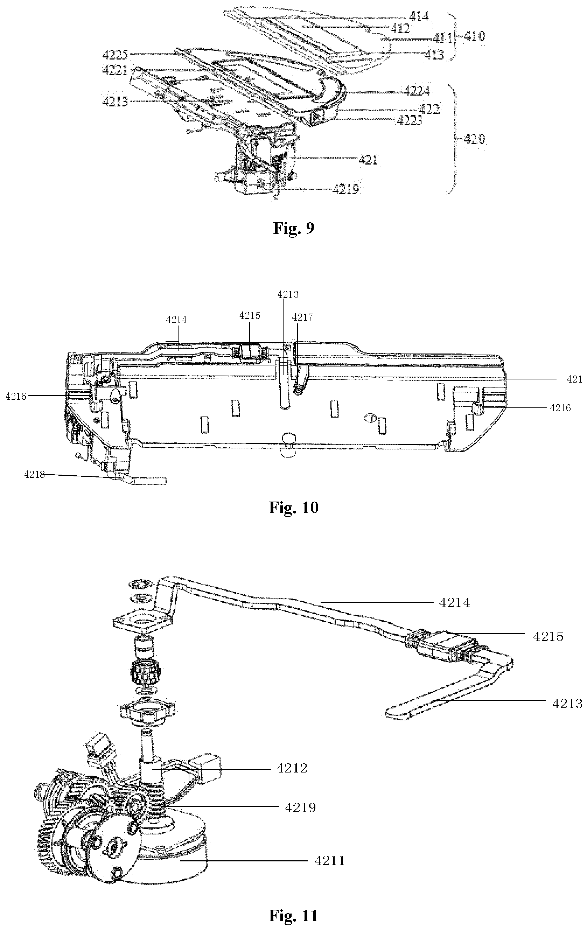

As shown in Figs. 9-11, the wet cleaning module 400 according to the present disclosure is configured to clean at least a part of an operating surface by means of wet cleaning. The wet cleaning module 400 includes: a cleaning head 410 and a driving unit 420, wherein the cleaning head 410 is used for cleaning at least a part of the operating surface, and the driving unit 420 is used for driving the cleaning head 410 to reciprocate along a target surface, the target surface being a part of the operating surface. The cleaning head 410 reciprocates along a surface to be cleaned, and a surface of the cleaning head 410 in contact with the surface to be cleaned is provided with a cleaning cloth or a cleaning plate, which generates a high-frequency friction with the surface to be cleaned through a reciprocating motion thereof, thereby removing stains on the surface to be cleaned. The reciprocating motion may be a repeated motion along any one or more directions within the operating surface, or may be a vibrating motion perpendicular to the operating surface, which is not strictly limited.

As shown in Fig. 9, the driving unit 420 includes: a driving platform 421 connected to a bottom surface of the mobile platform 100 for providing a driving force; and a supporting platform 422 detachably connected to the driving platform 421 for supporting the cleaning head 410 and being able to lift and lower under the driving of the driving platform 421.

A lifting and lowering module is provided between the cleaning module 150 and the mobile platform 100, so that the cleaning module 150 may better contact the surface to be cleaned, or different cleaning strategies are used for surfaces to be cleaned made of different materials.

The dry cleaning module 151 may be connected to the mobile platform 100 by a passive lifting and lowering module. When the cleaning apparatus encounters an obstacle, the dry cleaning module 151 may more easily pass the obstacle by the lifting and lowering module.

The wet cleaning module 400 may be connected to the mobile platform 100 by an active lifting and lowering module. When the wet cleaning module 400 does not participate in the work temporarily, or when encountering a surface to be cleaned which cannot cleaned by the wet cleaning module 400, the wet cleaning module 400 is lifted by the active lifting and lowering module and separated from the surface to be cleaned, and thus cleaning means may be changed.

As shown in Figs. 10-11, the driving platform 421 includes: a motor 4211 disposed on a side of the driving platform 421 close to the mobile platform 100 and outputting power by a motor output shaft; a driving wheel 4212 connected to the motor output shaft and having an asymmetric structure; and a vibrating member 4213 which is disposed on a side of the driving platform 421 opposite to the motor 4211 and connected to the driving wheel 4212 and reciprocates under the asymmetrical rotation of the driving wheel 4212.

The driving platform 421 may further include a driving wheel and a gear mechanism. The gear mechanism 235 may connect the motor 4211 and the driving wheel 4212. The motor 4211 may directly drive the driving wheel 4212 to swivel, or may indirectly drive the driving wheel 4212 to swivel through the gear mechanism. Those skilled in the art can understand that the gear mechanism may be one gear, or may be a gear set composed of a plurality of gears.

The motor 4211 simultaneously transmits, by a power transmission device, power to the cleaning head 410, the driving platform 421, the supporting platform 422, a water delivery mechanism, a water tank and the like. The energy system 160 provides power and energy for the motor 4211 and is entirely controlled by the control system 130. The power transmission device may be a gear drive, a chain drive, a belt drive, or may be a worm gear or the like.

The motor 4211 has a forward output mode and a reverse output mode. In the forward output mode, the motor 4211 rotates in the forward direction, and in the reverse output mode, the motor 4211 rotates in the reverse direction. In the forward output mode of the motor 4211, the motor 4211 may simultaneously drive, by the power transmission device, the cleaning head 410 in the wet cleaning module 400 and the water delivery mechanism to synchronously move.

Further, the driving platform 421 further includes: a connecting rod 4214 extending along an edge of the driving platform 421 and connecting the driving wheel 4212 and the vibrating member 4213 so that the vibrating member 4213 extends to a preset position. An extending direction of the vibrating member 4213 is perpendicular to the connecting rod 4214.

The motor 4211 is connected to the driving wheel 4212, the vibrating member 4213, the connecting rod 4214 and a vibration buffering device 4215 through the power transmission device. When the wet cleaning module 400 is activated, the motor 4211 starts to rotate forward, the motor 4211 drives, through the driving wheel 4212, the connecting rod 4214 to reciprocate along a surface of the driving platform 421, and at the same time, the vibration buffering device 4215 drives the vibrating member 4213 to reciprocate along the surface of the driving platform 421, the vibrating member 4213 drives a cleaning substrate 4221 to reciprocate along a surface of the supporting platform 422, and the cleaning substrate 4221 drives a movable region 412 to reciprocate along the surface to be cleaned. At this point, a clean water pump makes clean water flow out from a clean water tank, and the clean water is sprinkled on the cleaning head 410 through a water discharging device 4217, and the cleaning head 410 reciprocates to clean the surface to be cleaned.

The cleaning intensity/efficiency of the automatic cleaning apparatus may also be automatically and dynamically adjusted according to an operating environment of the automatic cleaning apparatus. For example, the automatic cleaning apparatus may achieve dynamical adjustment according to physical information of the surface to be cleaned detected by the perception system 120. For example, the perception system 120 may detect the flatness of the surface to be cleaned, a material of the surface to be cleaned, whether there is oil and dust, and other information and transmit the information to the control system 130 of the automatic cleaning apparatus. Correspondingly, the control system 130 may instruct the automatic cleaning apparatus to automatically and dynamically adjust a rotational speed of the motor and a transmission ratio of the power transmission device according to the operating environment of the automatic cleaning apparatus, and thus to adjust a preset reciprocating cycle of the reciprocating motion of the cleaning head 410.

For example, when the automatic cleaning apparatus operates on a flat ground, the preset reciprocating period may be automatically and dynamically adjusted to be longer, and a water volume of the water pump may be automatically and dynamically adjusted to be smaller; and when the automatic cleaning apparatus operates on a less flat ground, the preset reciprocating period may be automatically and dynamically adjusted to be shorter, and the water volume of the pump may be automatically and dynamically adjusted to be larger. This is because it is easier to clean the flat ground than the less flat ground, and thus the reciprocating motion of the cleaning head 410 at a higher speed (i.e., higher frequency) and a larger water volume are needed for cleaning an uneven ground.

For another example, when the automatic cleaning apparatus operates on a table, the preset reciprocating period may be automatically and dynamically adjusted to be longer, and the water volume of the water pump may be automatically and dynamically adjusted to be smaller; and when the automatic cleaning apparatus 100 operates on a ground, the preset reciprocating period may be automatically and dynamically adjusted to be shorter, and the water volume of the water pump may be automatically and dynamically adjusted to be larger. This is because the table has less dust and oil compared to the ground, and the material of which the table is made easier to clean, and thus only a fewer number of reciprocating motions of the cleaning head 410 and a relatively smaller water volume of the water pump are needed for cleaning the table.

The supporting platform 422 includes the cleaning substrate 4221 disposed movably on the supporting platform 422. The cleaning substrate 4221 reciprocates under the vibration of the vibrating member 4213. Optionally, the cleaning substrate 4221 includes: an assembling notch (not shown) disposed at a position in contact with the vibrating member 4213. When the supporting platform 422 is connected to the driving platform 421, the vibrating member 4213 is assembled to the assembling notch, so that the cleaning substrate 4221 may reciprocate synchronously with the vibrating member 4213.

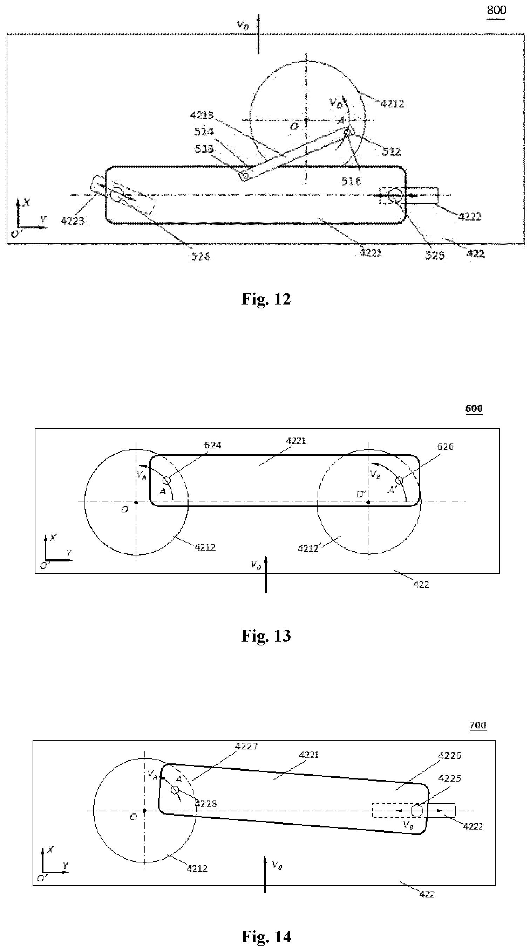

Fig. 12 shows another cleaning head driving mechanism 800 based on a crank slider mechanism according to various embodiments of the present application. The driving mechanism 800 may be applied to the driving platform 421. The driving mechanism 800 includes a driving wheel 4212, a vibrating member 4213, a cleaning substrate 4221, a sliding slot 4222 (a first sliding slot) and a sliding slot 4223 (a second sliding slot).

The sliding slots 4222 and 4223 are formed in the supporting platform 422. Both ends of the cleaning substrate 4221 include a slider 525 (a first slider) and a slider 528 (a second slider), respectively. Each of the sliders 525 and 528 is a protrusion at each of both ends of the cleaning substrate 4221. The slider 525 is inserted within the sliding slot 4222 and may slide along the sliding slot 4222; and the slider 528 is inserted within the sliding slot 4223 and may slide along the sliding slot 4223. In some embodiments, the sliding slot 4222 and the sliding slot 4223 are on the same line. In some embodiments, the sliding slot 4222 and the sliding slot 4223 are not on the same line. In some embodiments, the sliding slot 4222 and the sliding slot 4223 extend in the same direction. In some embodiments, an extending direction of the sliding slot 4222 and an extending direction of the sliding slot 4223 are the same as that of the cleaning substrate 4221. In some embodiments, the extending direction of the sliding slot 4222 and the extending direction of the sliding slots 4223 are different from that of the cleaning substrate 4221. In some embodiments, the extending direction of the sliding slot 4222 is different from the extending direction of the sliding slot 4223. For example, as shown in Fig. 12, the extending direction of the sliding slot 4222 is the same as that of the cleaning substrate 4221, and the extending direction of the sliding slot 4223 is angled relative to that of the sliding slot 4222.

The vibrating member 4213 includes a swiveling end 512 and a sliding end 514. The swiveling end 512 is connected to the driving wheel 4212 through a first pivot 516, and the sliding end 514 is connected to the cleaning substrate 4221 through a second pivot 518.

A swiveling center of the driving wheel 4212 is a point O, and a pivoting center of the first pivot 516 is a point A. The point O and the point A do not coincide, and the distance between the point O and the point A is a preset distance d.

When the driving wheel 4212 rotates, the point A also swivels along a circular path. Correspondingly, the swiveling end 512 follows the point A to swivel along a circular path; and the sliding end 514 drives the cleaning substrate 4221 to slide through the second pivot 518. Correspondingly, the slider 525 of the cleaning substrate 4221 reciprocates linearly along the sliding slot 4222; and the slider 528 of the cleaning substrate 4221 reciprocates linearly along the sliding slot 4223. In Fig. 4, a moving speed of the mobile platform 100 is V0, and a moving direction thereof is the target direction. According to some embodiments, when the sliding slot 4223 and the sliding slot 4222 are respectively approximately perpendicular to the direction of the moving direction of the mobile platform 100, an overall displacement of the cleaning substrate 4221 is substantially perpendicular to the target direction. According to some other embodiments, when any one of the sliding slot 4223 and the sliding slot 4222 forms an angle other than 90 degrees with the target direction, the overall displacement of the cleaning substrate 4221 includes both a component perpendicular to the target direction and a component parallel to the target direction.

Further, a vibration buffering device 4215 is included, which is disposed on the connecting rod 4214 for reducing vibration in a specific direction. In this embodiment, the vibration buffering device 4215 is used for reducing vibration in the direction of the moving component perpendicular to the target direction of the automatic cleaning apparatus.

Fig. 13 shows another cleaning head driving mechanism 600 based on a double-crank mechanism according to various embodiments of the present application. The driving mechanism 600 may be applied to the driving platform 421. The driving mechanism 600 includes a driving wheel 4212 (a first driving wheel), a driving wheel 4212' (a second driving wheel), and a cleaning substrate 4221.

The cleaning substrate 4221 has two ends, a first end thereof is connected to the driving wheel 4212 through a pivot 624 (a first pivot); and a second end thereof is connected to the driving wheel 4212' through a pivot 626 (a second pivot). A swiveling center of the driving wheel 4212 is a point O, and a pivoting center of the pivot 624 is a point A. The point O and the point A do not coincide, and the distance between the point O and the point A is a preset distance d. A swiveling center of the driving wheel 4212' is a point O', and a pivoting center of the pivot 626 is point A'. The point O' and the point A' do not coincide, and the distance between the point O' and the point A' is a preset distance d. In some embodiments, the point A, the point A', the point O, and the point O' are on the same plane. Therefore, the driving wheel 4212, the driving wheel 4212' and the cleaning substrate 4221 may form the double-crank mechanism (or a parallelogram mechanism), wherein the cleaning substrate 4221 acts as a coupling lever, and the driving wheels 4212 and 4212' act as two cranks.

Further, a vibration buffering device 4215 is included, which is disposed on the connecting rod 4214 for reducing vibration in a specific direction. In this embodiment, the vibration buffering device 4215 is used for reducing vibration in the direction of the moving component perpendicular to the target direction of the automatic cleaning apparatus.

Fig. 14 shows a driving mechanism 700 based on a crank slider mechanism according to various embodiments of the present application. The driving mechanism 700 may be applied to the driving platform 421. The driving mechanism 700 includes a driving wheel 4212, a cleaning substrate 4221 and a sliding slot 4222.

The sliding slot 4222 is formed in the supporting platform 422. The cleaning substrate 4221 includes a swiveling end 4227 and a sliding end 4226. The swiveling end 4227 is connected to the driving wheel 4212 through a pivot 4228. A swiveling center of the driving wheel 4212 is a point O, and a pivoting center of the pivot 4228 of the swiveling end is a point A. The point O and the point A do not coincide, and the distance between the point O and the point A is a preset distance d. The sliding end 4226 includes a slider 4225. The slider 4225 is a protrusion on the sliding end 4226. The slider 4225 is inserted within the sliding slot 4222 and may slide along the sliding slot 4222. Therefore, the driving wheel 4221, the cleaning substrate 4221, the slider 4225 and the sliding slot 4222 constitute the crank slider mechanism.

When the driving wheel 4212 rotates, the point A swivels along a circular path. Correspondingly, the swiveling end 4227 of the cleaning substrate 4221 follows the point A to swivel along a circular path; and the slider 4225 also slides in the sliding slot 4222 to reciprocate linearly. As a result, the cleaning substrate 4221 starts to reciprocate. According to some embodiments, the sliding slot 4222 is approximately perpendicular to the direction of the target direction of the mobile platform. Therefore, the linear motion of the sliding end 4226 includes a component perpendicular to the target direction, and the circular swiveling motion of the swiveling end 4227 includes both a component perpendicular to the target direction and a component parallel to the target direction.

In Fig. 14, the moving speed of the mobile platform is V0, and a moving direction thereof is the target direction; and the sliding slot 4222 is approximately perpendicular to the target direction. At this point, the entire reciprocating motion of the cleaning substrate 4221 includes both a movement component parallel to the target direction of the automatic cleaning apparatus and a movement component perpendicular to the target direction of the automatic cleaning apparatus.

Further, a vibration buffering device 4215 is included, which is disposed on the connecting rod 4214 for reducing vibration in a specific direction. In this embodiment, the vibration buffering device 4215 is used for reducing vibration in the direction of the moving component perpendicular to the target direction of the automatic cleaning apparatus.

Further, the supporting platform 422 further includes: an elastic detaching button 4229 disposed on at least one side of the supporting platform 422 for detachably connecting the supporting platform 422 to a pawl 4216 of the driving platform 421; and at least one assembling region 4224 disposed on the supporting platform 422 for assembling the cleaning head 410. The assembling region 4224 may be formed of an adhesive material with an adhesive layer.

As shown in Fig. 9, the cleaning head 410 includes: a movable region 412 connected to the cleaning substrate 4221 and reciprocating along a surface to be cleaned under the driving of the cleaning substrate 4221. The movable region 412 is disposed at a substantially central position of the cleaning head 410. An adhesive layer is provided on a side of the movable region 412 which is connected to the cleaning substrate 4221, and the movable region 412 is connected to the cleaning substrate 4221 through the adhesive layer.

Optionally, the cleaning head 410 further includes: a fixed region 411 connected to a bottom of the supporting platform 422 through the at least one assembling region 4224. The fixed region 411 cleans at least a part of the operating surface along with the movement of the supporting platform 422.

Further, the cleaning head 410 further includes: a flexible connecting portion 413 disposed between the fixed region 411 and the movable region 412 for connecting the fixed region 411 and the movable region 412. The cleaning head 410 further includes: a sliding buckle 414 extending along an edge of the cleaning head 410 and detachably mounted on at an engagement position 4225 of the supporting platform 422.

As shown in Fig. 9, the cleaning head 410 may be made of a material having a certain elasticity, and the cleaning head 410 is fixed on the surface of the supporting platform 422 through an adhesive layer so as to reciprocate. When operating, the cleaning head 410 is always in contact with the surface to be cleaned.

The water delivery mechanism includes the water discharging device 4217. The water discharging device 4217 may be directly or indirectly connected with a cleaning liquid outlet of a water tank (not shown), that is, a liquid discharging port of the clean water tank. A cleaning liquid may flow toward the water discharging device 4217 via the cleaning liquid outlet of the water tank, and may be evenly coated on the surface to be cleaned through the water discharging device. A connecting member (not shown in the figures) may be provided on the water discharging device, and the water discharging device is connected to the cleaning liquid outlet of the water tank through the connecting member. The water discharging device is provided with a distributing port. The distributing port may be a continuous opening, or a combination of several discontinuous small openings. Several nozzles may be provided at the distributing port. The cleaning liquid flows toward the distributing port via the cleaning liquid outlet of the water tank and the connecting member of the water discharging device, and is evenly coated on the operating surface via the distributing port.

The water delivery mechanism may further include a clean water pump 4219 and/or a clean water pump pipe 4218. The clean water pump 4219 may be communicated with the cleaning liquid outlet of the water tank directly or communicated with the cleaning liquid outlet of the water tank through the clean water pump pipe 4218.

The clean water pump 4219 may be connected to the connecting member of the water discharging device, and may be configured to pump the cleaning fluid from the water tank to the water discharging device. The clean water pump may be a gear pump, a vane pump, a plunger pump, a peristaltic pump, and the like.

The water delivery mechanism draws the cleaning liquid out of the clean water tank through the clean water pump 4219 and the clean water pump pipe 4218, and transports the cleaning liquid to the water discharging device. The water discharging device 4217 may be a sprinkler head, a drip hole, a wet cloth, and the like, and may spread water evenly on the cleaning head so as to wet the cleaning head and the surface to be cleaned. Stains on the wetted surface to be cleaned may be cleaned more easily. In the wet cleaning module 400, the power/flow rate of the clean water pump may be adjusted.

The driving unit and a vibrating region are added to the wet cleaning module, and thus the cleaning head may reciprocate so as to repeatedly clean the surface to be cleaned. Therefore, in the movement trajectory of a cleaning robot, a region may be cleaned several times when the cleaning robot passes through the region just one time, thereby greatly enhancing the cleaning effect, especially for regions with more stains, the cleaning effect is apparent.

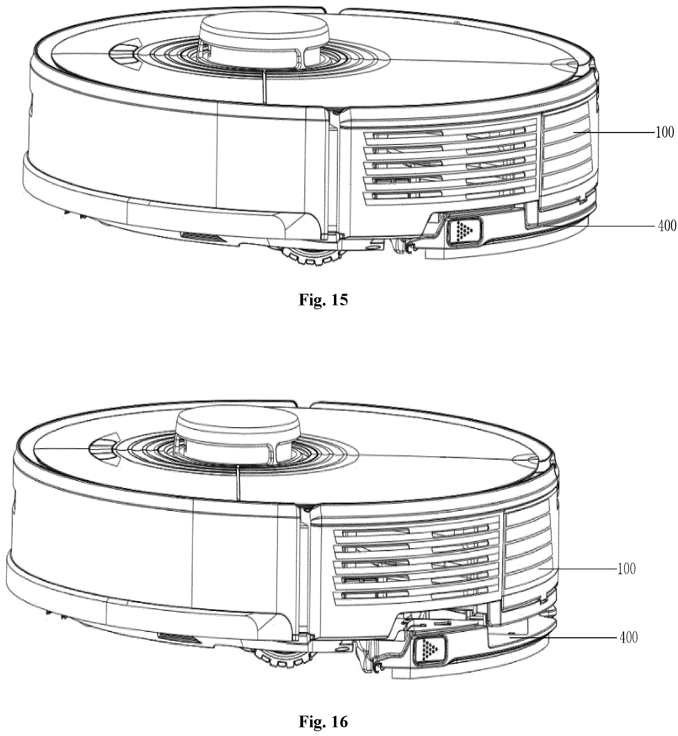

According to a specific embodiment of the present invention, the present invention provides a liftable automatic cleaning apparatus. The liftable automatic cleaning apparatus includes a mobile platform 100 configured to move automatically on an operating surface; and a wet cleaning module 400 movably connected to the mobile platform 100 through a four-link lifting and lowering structure 500 and configured to clean at least a part of the operating surface by means of wet cleaning. The four-link lifting and lowering structure 500 is a parallelogram structure and used to switch the wet cleaning module 400 between a lifting state and a lowering state. The lifting state is a state in which the wet cleaning module 400 leaves the operating surface, as shown in Fig. 15; and the lowering state is a state in which the wet cleaning module 400 is attached to the operating surface, as shown in Fig. 16.

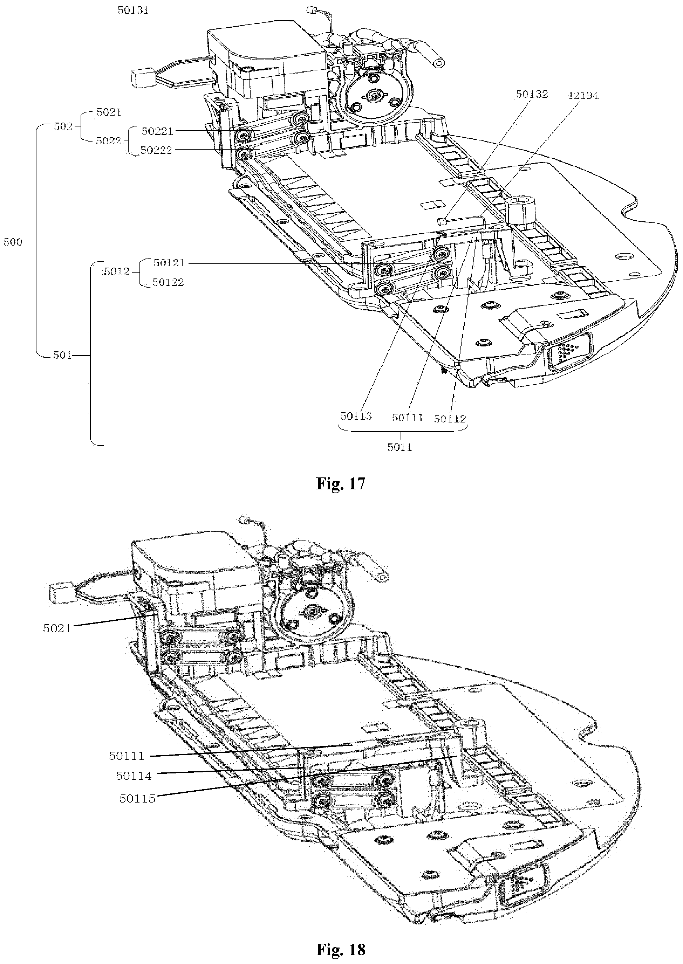

As shown in Figs. 17-18, the four-link lifting and lowering structure 500 includes: a first connecting end 501 for providing active power to switch the wet cleaning module 400 between the lifting state and the lowering state; and a second connecting end 502 disposed opposite to the first connecting end 501 and rotated under the action of the active power. The first connecting end 501 and the second connecting end 502 are located on two sides of the wet cleaning module 400, respectively, and the wet cleaning module 400 is lifted or lowered by stably providing a lifting force or a lowering force.

Specifically, the first connecting end 501 includes a first bracket 5011 fixedly connected to a bottom of the mobile platform 100. The first bracket 5011 is roughly shaped like a Chinese character " 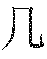 ", and the first bracket 5011 includes: a cross beam 50111, a first longitudinal beam 50114 and a second longitudinal beam 50115. Tail ends of the first longitudinal beam 50114 and the second longitudinal beam 50115 are fixedly connected to the mobile platform 100 and the wet cleaning module 400 respectively through bolts, so as to provide a supporting force when the wet cleaning module 400 is lifted and lowered.

The first connecting end 501 further includes a first connecting rod pair 5012. One end of the first connecting rod pair 5012 is rotatably connected to the first bracket 5011, and the other end thereof is rotatably connected to the wet cleaning module 400. The first connecting rod pair 5012 may be of a hollowed-out structure, which can reduce overall weight of lifting ends and lowering ends.

Optionally, the first connecting rod pair 5012 includes a first connecting rod 50121 and a second connecting rod 50122 which are arranged in parallel. A first end of each of the first connecting rod 50121 and the second connecting rod 50122 is rotatably connected to the first longitudinal beam 50114 through a movable stud, and a second end of each of the first connecting rod 50121 and the second connecting rod 50122 is rotatably connected to the wet cleaning module 400 through a movable stud. For example, each of two ends of each of the first connecting rod 50121 and the second connecting rod 50122 is provided with a through hole having a diameter larger than that of the movable stud, so that the movable stud may rotate freely within the through hole, and the movable stud is fixedly connected to the first longitudinal beam 50114 through the through hole. When the motor 4211 provides a pulling force to the second end through a cable, the first ends of the first connecting rod 50121 and the second connecting rod 50122 simultaneously rotate around the movable studs at the first ends, and the second ends thereof are lifted under the pulling force of the cable, so that the wet cleaning module 400 is lifted. When the motor 4211 releases the pulling force to the second end through the cable, the first ends of the first connecting rod 50121 and the second connecting rod 50122 simultaneously rotate in the reverse direction around the movable studs at the first ends, and the second ends thereof are lowered under the action of gravity, so that the wet cleaning module 400 is lowered.

The lifting and lowering structure 500 further includes the cable 42194 for providing a pulling force to rotate the first connecting rod pair 5012 within a preset angle. The cable 42194 includes a cable motor terminal 50131 and a cable bracket terminal 50132.

The cable motor terminal 50131 is connected to the driving unit 420, for example, is wound on and connected to the gear connected to the motor output shaft, and extends and contracts under the rotation of the motor; and the cable bracket terminal 50132 is connected to the first bracket 5011, and the motor lifts or lowers the second ends of the first connecting rod 50121 and the second connecting rod 50122 through the cable 42194.

Optionally, the first bracket 5011 further includes: a sliding slot 50112 extending along a surface of the cross beam 50111; and a snapping hole 50113 running through the cross beam 50111 and disposed at an extended end of the sliding slot 50112 for accommodating and snapping the cable bracket terminal 50132. The cable 42194 is connected to the second ends of the first connecting rod 50121 and the second connecting rod 50122 through the sliding slot 50112 and the snapping hole 50113. The sliding slot 50112 may restrict a movement direction of the cable, thereby ensuring the stability during lifting and lowering of the module, and the width of the sliding slot should be matched with the thickness of the cable.

As shown in Fig. 17, the second connecting end 502 includes: a second bracket 5021 fixedly connected to a bottom of the mobile platform 100; and a second connecting rod pair 5022, one end of which is rotatably connected to the second bracket 5021, and the other end of which is rotatably connected to the wet cleaning module 400. The second connecting rod pair 5022 rotates with the rotation of the first connecting rod pair 5012. The second connecting rod pair 5022 may be of a hollowed-out structure, which can reduce overall weight of lifting ends and lowering ends.

Specifically, the second connecting rod pair 5022 includes a third connecting rod 50221 and a fourth connecting rod 50222 which are arranged in parallel. A first end of each of the third connecting rod 50221 and the fourth connecting rod 50222 is rotatably connected to the second bracket 5021 through a movable stud, and a second end of each of the third connecting rod 50221 and the fourth connecting rod 50222 is rotatably connected to the wet cleaning module 400 through a movable stud. For example, each of two ends of each of the third connecting rod 50221 and the fourth connecting rod 50222 is provided with a through hole having a diameter larger than that of the movable stud, so that the movable stud may rotate freely within the through hole, and the movable stud is fixedly connected to the second bracket 5021 through the through hole. When the first connecting end 501 rotates under the driving of the motor 50131, the first ends of the third connecting rod 50221 and the fourth connecting rod 50222 simultaneously rotate around the movable studs at the first ends, and the second ends of the third connecting rod 50221 and the fourth connecting rod 50222 simultaneously rotate around the movable studs at the second ends, so that the wet cleaning module 400 is lifted. When the pulling force to the first connecting end 501 is released, the first ends of the third connecting rod 50221 and the fourth connecting rod 50222 simultaneously rotate in the reverse direction around the movable studs at the first ends, and the second ends thereof are lowered under the action of gravity, so that the wet cleaning module 400 is lowered.

By means of the four-link lifting and lowering structure disposed between the wet cleaning module and the mobile platform, the wet cleaning module may be lifted and lowered relative to the mobile platform. When a mopping task is performed, the wet cleaning module is lowered, so that the wet cleaning module is in contact with the ground, and when the mopping task is completed, the wet cleaning module is lifted, so that the wet cleaning module is separated from the ground, thereby avoiding the increased resistance due to the existence of the cleaning module when the cleaning apparatus moves freely on the surface to be cleaned.

In cooperation with a surface medium sensor and other sensors that may detect a surface type of the surface to be cleaned, the lifting and lowering module enables the wet cleaning module to perform a cleaning operation according to different surfaces to be cleaned. For example, the lifting and lowering module lifts the wet cleaning module in case of a carpet surface, and lowers the wet cleaning module in case of a floor surface or a floor tile surface, for cleaning. Thus, a more comprehensive cleaning effect is achieved.

With the development of ground sweeping robots, existing ground sweeping robots have been developed into cleaning robots that combine dry cleaning and wet cleaning. In a cleaning robot 2000 shown in Fig. 2, both a dry cleaning module 151 and a wet cleaning module 400 are mounted thereon. During cleaning, the dry cleaning module 151 is located at a front end of the cleaning robot 2000 in a travelling direction to sweep a ground; and the wet cleaning module 400 is located at a rear end of the cleaning robot 2000 in the traveling direction to mop and clean the ground after the dry cleaning module 151 finishes sweeping. However, the wet cleaning module 400 generally cannot be used for carpet cleaning.

In practical applications, in order to prevent the wet cleaning module 400 from wetting the carpet, a lifting and lowering mechanism for the wet cleaning module is usually provided on the cleaning robot 2000. When a surface medium sensor 103 of the cleaning robot 2000 identities a carpet, the wet cleaning module may be lifted, so that the wet cleaning module will not contact the carpet when the cleaning robot 2000 passes the carpet. When it is detected that the cleaning robot has left the carpet, the wet cleaning module 400 may be lowered again to mop and clean the ground.

However, due to the limitation of the height of the cleaning robot 2000, the range in which the wet cleaning module 400 may be lifted and lowered is very limited, and is usually only about 1 mm. For long-fluff carpets, mats, clothing, etc., even if the wet cleaning module 400 is lifted, it is difficult to avoid the above items from getting wet, and even the cleaning robot 2000 may get stuck and thus cannot move.

In addition, when the cleaning robot 2000 changes direction after completing its cleaning or upon encountering an obstacle, it can easily end up in a narrow gap surrounded by a plurality of other obstacles. In such cases, the cleaning robot 2000 is highly prone to getting stuck and might not be able to extricate itself.

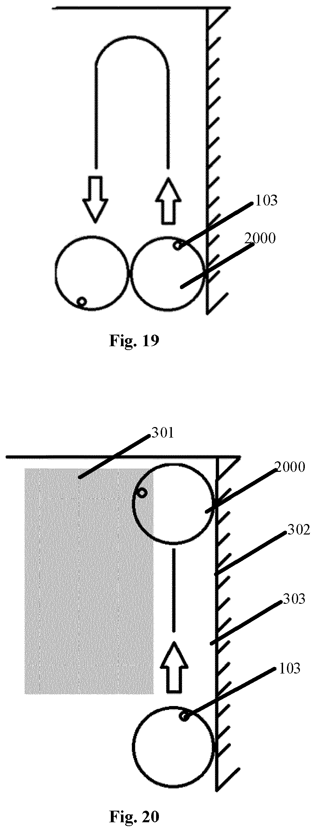

Based on this, an exemplary embodiment of the present disclosure provides a cleaning robot extrication method, which will be explained with reference to Fig. 19 and Fig. 20.

As shown in Fig. 19, when the cleaning robot 2000 cleans a ground without a carpet along a wall, or cleans a corner distant from the carpet, the cleaning robot 2000 may sense a distance between the body of the cleaning robot 2000 and the wall through a side distance sensor, keep the distance between the body of the cleaning robot 2000 and the wall constant and move forward along an edge of the wall, so that dust at the edge of the wall is swept into a main brush of the body of the cleaning robot 2000 through the side brush 157 at a front side of the cleaning robot 2000. Further, the wet cleaning module 400 may also be used to mop and clean the ground. After completing the task of cleaning along the wall, the cleaning robot 2000 will automatically change its direction to continue cleaning the ground, as shown in Fig. 19.

However, when the cleaning robot 2000 cleans along a wall and changes its direction upon encountering obstacles such as another wall, and it detects a carpet 301, there might be a narrow gap 303 between the carpet 301 and the wall 302. When the cleaning robot 2000 enters the narrow gap 303, the surface medium sensor 103 is located on the side of the cleaning robot 2000 that is close to the wall 302, thereby not detecting the carpet 301 and remaining untriggered. When the cleaning robot 2000 changes its direction and returns after encountering an obstacle or completing the cleaning along the wall, the surface medium sensor 103 is triggered. If the width of the narrow gap 303 is not enough for the cleaning robot 2000 to change its direction, the cleaning robot 2000 will be stuck there and cannot come out, which brings a trouble to the user.

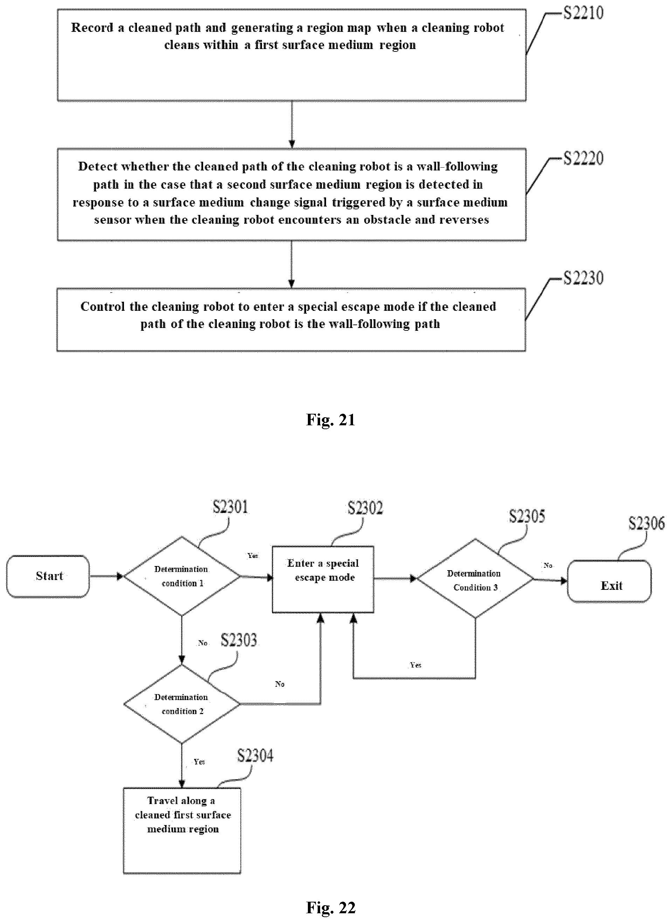

Based on the above case, referring to Fig. 21, a flowchart of a cleaning robot extrication method according to an exemplary embodiment of the present disclosure is shown. The cleaning robot extrication method may include the following steps:
step S2210: recording a cleaned path and generating a regional map when the cleaning robot cleans within a first surface medium region;
step S2220: detecting whether the cleaned path of the cleaning robot is a wall-following path in the case that a second surface medium region is detected in response to a surface medium change signal triggered by the surface medium sensor when the cleaning robot encounters an obstacle and changes direction; and
step S2230: controlling the cleaning robot to enter a special extrication mode if the cleaned path of the cleaning robot is the wall-following path.

For the cleaning robot extrication method according to the exemplary embodiment of the present disclosure, when the cleaning robot cleans along the first surface medium region near a wall and is ready to change its direction due to obstacles, the surface medium sensor is triggered to detect that a surface medium has changed, and thus a second surface medium region such as a carpet is identified. In this case, whether the cleaned path of the cleaning robot is the wall-following path may be firstly determined, the cleaning robot enters the special extrication mode if the cleaned path of the cleaning robot is the wall-following path, so as to help the cleaning robot to extricate itself. The wall-following path refers to a path parallel to a surface of the wall when the cleaning robot cleans along the wall.

The cleaning robot extrication method according to the exemplary embodiment of the present disclosure provides a way for the cleaning robot to extricate itself when it changes direction after completing its cleaning along the wall. This method avoids the situation where the cleaning robot is stuck, improves the ability of the cleaning robot to extricate itself, reduces the failure rate of the cleaning robot, and consequently, improves the user experience.

It should be noted that the above cleaning robot extrication method is applicable when the cleaning robot is in a mode of not cleaning a carpet or in a mode in which the wet cleaning module is activated. In these two modes, the cleaning robot cannot get on the carpet, that is, the cleaning robot is in a mode of cleaning only the first surface medium region. Therefore, when the cleaning robot is stuck in a second surface medium region such as the carpet, the cleaning robot may be controlled to extricate itself without getting on the carpet by the cleaning robot extrication method according to the exemplary embodiment of the present disclosure, so as to reduce the probability that the cleaning robot gets stuck by the carpet.

In addition, the first surface medium here is one or more of a wood floor, a carpet, a ceramic tile, a cement surface and other ground surface medium; and the second surface medium is one or more of a wood floor, a carpet, a ceramic tile, a cement surface and other ground surface medium, which is different from the first surface medium.

In an exemplary embodiment of the present disclosure, in the process of cleaning the first surface medium region, the cleaning robot needs to record the cleaned path and generate the regional map, so that when the cleaning robot encounters an obstacle or is stuck, the cleaning robot may determine an extrication plan based on the previously generated regional map, so as to extricate itself easily.

Specifically, as shown in Fig. 22, the process may proceed to step S2301 based on the cleaned path and the regional map which are recorded by the cleaning robot, the process proceeds to a determination condition 1 if it is determined that the cleaning robot detects a second surface medium region when changing its direction. The determination condition 1 is to determine whether the cleaned path of the cleaning robot is a wall-following path; if yes, that is, the cleaned path of the cleaning robot is the wall-following path, then step S2302 is executed: the cleaning robot is controlled to enter a special extrication mode; and if no, that is, the cleaned path of the cleaning robot is not the wall-following path, then step S2303 is executed: the process may proceed to a determination condition 2. The determination condition 2 is to determine whether the cleaned first surface medium region is behind the cleaning robot based on the generated regional map; if no, then step S2302 is executed, that is, the cleaning robot is controlled to enter a special extrication mode; if yes, then step S2304 is executed: the cleaning robot is controlled to travel directly along the cleaned first surface medium region so as to avoid the second surface medium region. Step S2304 is simply referred to as travelling along the cleaned first surface medium region.

In an exemplary embodiment of the present disclosure, the special extrication mode includes: controlling the cleaning robot to reverse based on either the wall-following path, or the cleaned path, or the cleaned first surface medium region, where the cleaning robot is controlled to reverse along the wall-following path if the cleaned path of the cleaning robot is the wall-following path; and the cleaning robot is controlled to reverse along the cleaned path if the cleaned path of the cleaning robot is not the wall-following path and the cleaned first surface medium region is not behind the cleaning robot, so that the cleaning robot may avoid the second surface medium region as soon as possible to extricate itself.

In practical applications, the cleaning robot is controlled to rotate in place when the cleaning robot reverses a distance equivalent to a preset distance. During the process in which the cleaning robot rotates in place, if the second surface medium region is detected in response to the surface medium change signal triggered by the surface medium sensor, it means that the cleaning robot has not yet avoided the second surface medium region, that is, the cleaning robot has not yet extricated itself. At this point, the cleaning robot is controlled to continue to reverse until the surface medium sensor detects no surface medium change signal, and then it is determined that the cleaning robot has extricated itself.

In an exemplary embodiment of the present disclosure, the preset distance may be at least half a length of a body of the cleaning robot. Generally, after the cleaning robot reverses by half the length of the body of the cleaning robot, it can be ensured that the cleaning robot avoids the previous detection range during rotation. In practical applications, the preset distance may also be other distances greater than half the length of the body of the cleaning robot, which is not specially limited in this exemplary embodiment.

In practical applications, an angle by which the cleaning robot rotates in place may be 15-90 degrees, and the angle by which the cleaning robot rotates in place of the cleaning robot may also be increased in a progressive manner, that is, if a second surface medium region is not detected after the cleaning robot rotates in place by 15 degrees, the cleaning robot is controlled to rotate by another 15 degrees or other angles, and if the surface medium change signal is still not detected after the cleaning robot rotates by 90 degrees, it is determined that the cleaning robot has avoided the second surface medium region.

Referring to Fig. 22 again, after the cleaning robot executes step S2302 of controlling the cleaning robot to enter the special extrication mode, step S2305 needs to be executed, that is, the process proceeds to a determination condition 3: whether the surface medium sensor can detect the surface medium change signal is determined; if yes, that is, if the surface medium sensor can detect the surface medium change signal, step S2302 is continued to be executed: the cleaning robot is controlled to enter the special extrication mode; if no, that is, if the surface medium sensor detects no surface medium change signal, step S2306 is executed: the cleaning robot is controlled to exit the special extrication mode, simply referred to as exit.

In the cleaning robot extrication method according to an exemplary embodiment of the present disclosure, the cleaning robot is controlled to enter the special extrication mode to control the cleaning robot to reverse along one of the recorded wall-following path, the cleaned path or the cleaned first surface medium region. Thus, the situation that the cleaning robot gets stuck again caused by a random reversal of the cleaning robot is avoided, thereby increasing the success rate of the cleaning robot to extricate itself.

It should be noted that, in the process of controlling the cleaning robot to reverse along one of the recorded wall-following path, the cleaned path or the cleaned first surface medium region, the cleaning robot may select a way to reverse based on the order of the wall-following path, the cleaned path and the cleaned first surface medium region, so as to achieve the purpose of selecting an optimal path to reverse.

The existing common surface medium sensor mainly includes an infrared sensor, an ultrasonic sensor and other different sensor identification devices, and methods for detecting whether the surface medium at the position where the surface medium sensor of the cleaning robot is located has changed may be different. This exemplary embodiment takes an ultrasonic sensor as an example to illustrate a method of how the surface medium sensor triggers the surface medium change signal.

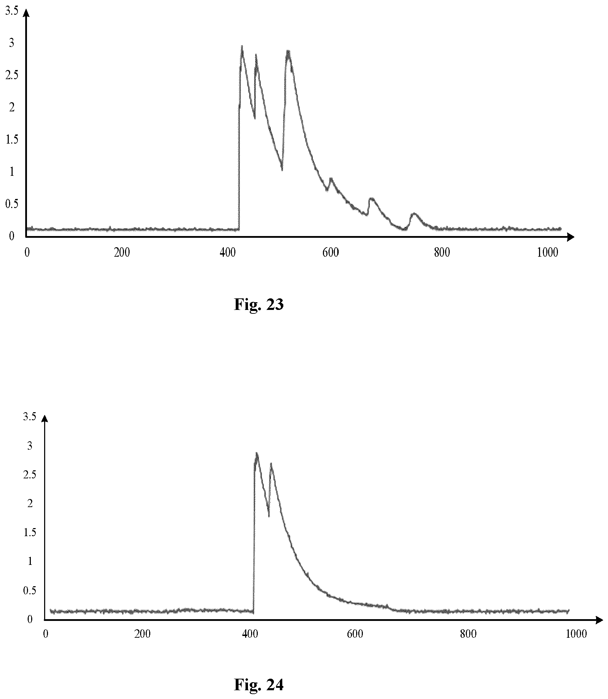

In practical applications, when an ultrasonic sensor is configured to emit an ultrasonic signal to the first surface medium region such as a ground and receive an echo signal reflected by the first surface medium region, since a waveform of an ultrasonic echo signal of a surface of the first surface medium region is different from that of an ultrasonic echo signal of a surface of the second surface medium region, as shown in Fig. 23 and Fig. 24, the surface of the first surface medium region and the surface of the second surface medium region may be distinguished based on the difference between the echo signals thereof. The surface of the second surface medium region refers to a surface of the second surface medium region laid on the surface of the ground. The waveform and the number of peaks of the echo signal may be used to characterize the signal.

In an exemplary embodiment of the present disclosure, the process of detecting that the surface medium sensor of the cleaning robot triggers the surface medium change signal specifically includes: controlling the surface medium sensor to emit an ultrasonic signal vertically towards a current surface, and receiving an actual echo signal reflected by the current surface; determining whether the actual echo signal is different from an echo signal of the surface of the first surface medium region, and if yes, determining that a position of the surface medium sensor is already within the second surface medium region, that is, the surface medium has changed, and at this point, the surface medium sensor will trigger the surface medium change signal.

In practical applications, after receiving an electrical signal, the ultrasonic sensor converts the electrical signal to an ultrasonic signal and emits the ultrasonic signal downwards onto a surface of a medium region. The above-mentioned ultrasonic signal is reflected by the surface of medium region and is received and converted to an electrical signal by the ultrasonic sensor. The process of determining the difference between the actual echo signal and the echo signal of the surface of the first surface medium region may include: determining whether the number of peaks in the actual echo signal is less than the number of peaks in the echo signal of the surface of the first surface medium region, and identifying the current ground as the surface of the second surface medium region if the number of peaks in the actual echo signal is smaller than the number of peaks in the echo signal of the surface of the first surface medium region. Specifically, for different regions, the actual echo signal may be separately compared with the echo signal of the surface of the first surface medium region corresponding to the current region, so as to improve the accuracy of identifying the second surface medium region.

In this exemplary embodiment, the echo signal of the second surface medium region is determined based on the echo signal of the surface of the first surface medium region, thereby reducing the difficulty of identifying the second surface medium region and improving the accuracy and precision of identifying the second surface medium region by the cleaning robot.

In an exemplary embodiment of the present disclosure, in the process of reversing in the special extrication mode, the cleaning robot may be controlled to adopt a forward-reversing mode or an opposite-reversing mode. In this exemplary embodiment, in order to prevent the cleaning robot from making continuous misjudgments and raising alarms, an opposite-reversing mode is adopted to ensure that the cleaning robot quickly extricates itself. An initial position here may be a position where the cleaning robot starts to clean along the wall, which is not limited in this exemplary embodiment.

Whether the cleaning robot has extricated itself from the second surface medium region is determined mainly based on the fact whether the surface medium sensor of the cleaning robot triggers the surface medium change signal. When the actual echo signal is the same as the echo signal of the surface of the first surface medium region, it is determined that the cleaning robot has extricated itself from the second surface medium region, which is not repeated here.

In practical applications, the cleaning robot also includes other functions that help to realize the overall operation, which will not be repeated in this exemplary embodiment.

It should be noted that the above method may be used not only for a cleaning robot having a dry cleaning device and a wet cleaning module, but also for a ground sweeping robot having only a dry cleaning device, or a ground mopping robot having only a wet cleaning module, or other intelligent robots that have an autonomous travelling mechanism and need to identify the structure of a ground, which is not limited in the exemplary embodiments of the present disclosure.

It should be noted that although the various steps of the method of the present disclosure are described in a specific order in the drawings, this does not require or imply that these steps must be performed in this specific order, or that all of the steps shown must be performed in order to achieve the desired result. Additionally or alternatively, some steps may be omitted, multiple steps may be combined into one step for execution, and/or one step may be decomposed into multiple steps for execution, and the like.

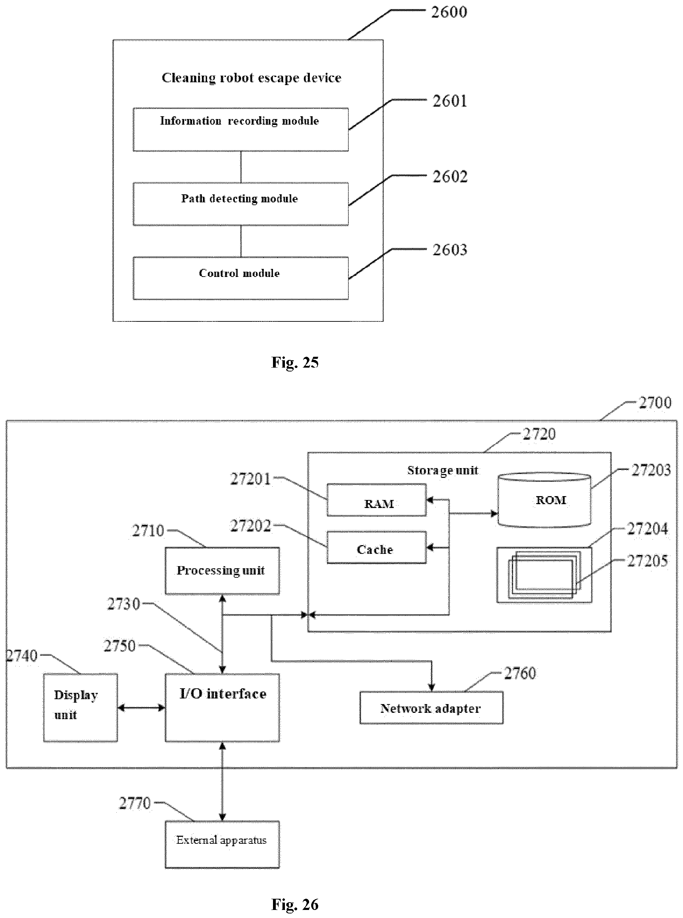

In an exemplary embodiment of the present disclosure, there is further provided a cleaning robot extrication device arranged in a cleaning robot including a surface medium sensor. As shown in Fig. 25, the cleaning robot extrication device 2600 may include: an information recording module 2601, a path detecting module 2602 and a control module 2603.

The information recording module 2601 is configured to record a cleaned path and generate a regional map when the cleaning robot cleans within a first surface medium region.

The path detecting module 2602 is configured to detect whether the cleaned path of the cleaning robot is a wall-following path in the case that a second surface medium region is detected in response to a surface medium change signal triggered by the surface medium sensor when the cleaning robot encounters an obstacle and changes direction.

The control module 2603 is configured to control the cleaning robot to enter a special extrication mode if the cleaned path of the cleaning robot is the wall-following path.

The specific details of the above-mentioned modules of the cleaning robot extrication device have been described in detail in the corresponding cleaning robot extrication method, and thus will not be repeated here.

It should be noted that although several modules or units of the apparatus for execution are mentioned in the above detailed description, this division is not mandatory. Indeed, according to embodiments of the present disclosure, the features and functions of two or more modules or units described above may be embodied in one module or unit. Conversely, the features and functions of one module or unit described above may be embodied in multiple modules or units.

In an exemplary embodiment of the present disclosure, there is further provided an electronic apparatus capable of implementing the above method.

It will be appreciated by those skilled in the art that, various aspects of the present invention may be implemented as a system, a method or a program product. Therefore, various aspects of the present invention may be embodied in the following forms: an entirely hardware embodiment, an entirely software embodiment (including firmware, microcode, etc.), or an embodiment combining hardware and software aspects, which may be collectively referred to herein as "a circuit", "a module" or "a system".

An electronic apparatus 2700 according to this embodiment of the present invention is described below with reference to Fig. 26. The electronic apparatus 2700 shown in Fig. 26 is only an example, and should not impose any limitation on the function and scope of use of the embodiment of the present invention.

As shown in Fig. 26, the electronic apparatus 2700 takes the form of a general-purpose computing apparatus. Components of the electronic apparatus 2700 may include, but are not limited to: at least one processing unit 2710, at least one storage unit 2720, a bus 2730 connecting different system components (including the storage unit 2720 and the processing unit 2710), and a display unit 2740.

The storage unit 2720 stores a program code. The program code may be executed by the processing unit 2710 so that the processing unit 2710 executes the steps according to various exemplary embodiments of the present invention described in the above "Exemplary Method" section of this Description. For example, the processing unit 2710 may execute step S2210 of recording a cleaned path and generating a regional map when the cleaning robot cleans within a first surface medium region; step S2220 of detecting whether the cleaned path of the cleaning robot is a wall-following path in the case that a second surface medium region is detected in response to a surface medium change signal triggered by the surface medium sensor when the cleaning robot encounters an obstacle and changes direction; and step S2230 of controlling the cleaning robot to enter a special extrication mode if the cleaned path of the cleaning robot is the wall-following path, as shown in Fig. 21.

The storage unit 2720 may include a readable medium in the form of a volatile storage unit, such as a random-access storage unit (RAM) 27201 and/or a cache storage unit 27202, and may further include a read-only storage unit (ROM) 27203.

The storage unit 2720 may also include a program/utility 27204 having a set (at least one) of program modules 27205 including, but not limited to, an operating system, one or more applications, other program modules, and program data. Each of the operating system, one or more application programs, other program modules, and program data or some combination thereof, may include an implementation of a networking environment.

The bus 2730 may represent one or more of several types of bus structures, including a memory unit bus or a memory unit controller, a peripheral bus, an accelerated graphics port, a processing unit or a local bus using any of a variety of bus structures.

The electronic apparatus 2700 may also communicate with one or more external apparatuses 2770 (e.g., a keyboard, a pointing apparatus, a Bluetooth apparatus, etc.), and may also communicate with one or more apparatuses that enable a user to interact with the electronic apparatus 2700, and/or may also communicate with any apparatus (e.g., a router, a modem, etc.) that enables the electronic apparatus 2700 to communicate with one or more other computing apparatuses. Such communication may occur via an input/output (I/O) interface 2750. Also, the electronic apparatus 2700 may also communicate with one or more networks (e.g., a local area network (LAN), a wide area network (WAN), and/or a public network such as the Internet) via a network adapter 2760. As shown in the figure, the network adapter 2760 communicates with other modules of the electronic apparatus 2700 via the bus 2730. It should be understood that, although not shown in the figure, other hardware and/or software modules may be used in conjunction with the electronic apparatus 2700, include but are not limited to: a microcode, an apparatus driver, a redundant processing unit, an external disk drive array, an RAID system, a tape drive and a data backup storage system.

Those skilled in the art can easily understand from the description of the above embodiments that the exemplary embodiments described herein may be implemented by software, or by a combination of software and necessary hardware. Therefore, the technical solutions according to the embodiments of the present disclosure may be embodied in the form of software products, and the software products may be stored in a non-volatile storage medium (which may be a CD-ROM, a U disk, a mobile hard disk, etc.) or on the network, include several instructions to cause a computing apparatus (which may be a personal computer, a server, a terminal apparatus, or a network apparatus, etc.) to execute the method according to the embodiments of the present disclosure.

In an exemplary embodiment of the present disclosure, there is further provided a computer-readable storage medium having stored thereon a program product capable of implementing the above-described method of the present Description. In some possible embodiments, aspects of the present invention may also be implemented in the form of a program product including a program code which, when the program product runs on a terminal apparatus, causes the terminal apparatus to execute the steps according to various exemplary embodiments of the present invention described in the above "Exemplary Method" section of this Description.

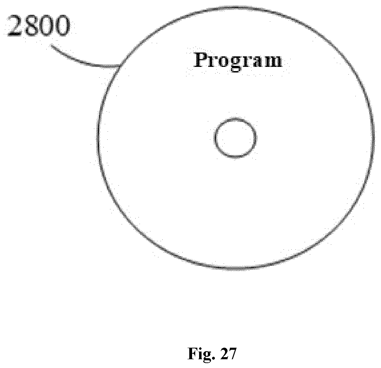

Referring to Fig. 27, a program product 2800 for implementing the above method according to an embodiment of the present invention is described, which may be in form of a portable compact disc read-only memory (CD-ROM) and include a program code, and may run on a terminal apparatus such as a personal computer. However, the program product of the present invention is not limited thereto, and in this document, the readable storage medium may be any tangible medium which contains or stores a program, and the program may be used by or in combination with an instruction execution system, means, or a device.

The program product may be any combination of one or more readable medium. The readable medium may be a readable signal medium or a readable storage medium. The readable storage medium may be, for example, but not limited to, an electrical, magnetic, optical, electromagnetic, infrared, or semiconductor system, means or device, or any combination of the above. More specific examples (a non-exhaustive list) of the readable storage medium may include: an electrical connection with one or more wires, a portable disk, a hard disk, a random-access memory (RAM), a read-only memory (ROM), an erasable programmable read-only memory (EPROM or a flash memory), an optical fiber, a portable compact disc read-only memory (CD-ROM), an optical storage device, a magnetic storage device, or any suitable combination of the above.

The computer-readable signal medium may include a data signal propagated in a baseband or as part of a carrier wave, and readable program codes are carried in the data signal. This propagated data signal may be in many forms, including but not limited to an electromagnetic signal, an optical signal, or any suitable combination of the above. The readable signal medium may also be any readable medium other than the readable storage medium, and the readable medium may send, propagate, or transmit the program for use by or in combination with an instruction execution system, means, or device.

The program codes contained on the readable medium may be transmitted by any suitable medium, including, but not limited to: wireless, wireline, optical cable, RF, etc., or any suitable combination of the above.

The program codes for executing the operations of the present invention may be written in one programming language or any combination of a plurality of programming languages. The above programming languages include object-oriented programming languages, such as Java and C++, and also include conventional procedural programming languages, such as "C" language or similar programming languages. The program codes may execute entirely on a user computing apparatus, partly on the user computing apparatus, as an independent software package, partly on the user computing apparatus and partly on a remote computing apparatus, or entirely on the remote computing apparatus or a server. In the case of the remote computing apparatus, the remote computing apparatus may be connected to the user computing apparatus through any type of network, including the local area network (LAN) or wide area network (WAN), or may be connected to an external computing apparatus (for example, via the Internet using an internet service provider (ISP)).

Furthermore, the above-mentioned drawings are merely provided for schematically illustrating the processes included in the method according to exemplary embodiments of the present invention, and are not intended to be limiting. It is readily understood that the processes shown in the above-mentioned drawings do not indicate or limit the chronological order of these processes. In addition, it is also readily understood that these processes may be performed synchronously or asynchronously, for example, in multiple modules.

Other embodiments of the present disclosure will be easily conceivable by those skilled in the art from consideration of the Description and practice of the present disclosure. This application is intended to cover any variations, uses, or adaptations of the present disclosure following the general principles of the present disclosure and including common knowledge or commonly used technical measures in the art which are not disclosed herein. The Description and embodiments are to be considered as exemplary only, with a true scope and spirit of the present disclosure being indicated by the claims.

It will be appreciated that the present disclosure is not limited to the exact construction that has been described above and illustrated in the accompanying drawings, and that various modifications and changes can be made without departing from the scope thereof. The scope of the present disclosure is only defined by the appended claims.

## Claims

1. A cleaning robot extrication method, applied to a cleaning robot comprising a surface medium sensor, the method comprising:
recording a cleaned path and generating a regional map when the cleaning robot cleans within a first surface medium region;
detecting whether the cleaned path is a wall-following path in an event that a second surface medium region is detected in response to a surface medium change signal triggered by the surface medium sensor when the cleaning robot encounters an obstacle and changes direction; and
controlling the cleaning robot to enter a special extrication mode if the cleaned path is the wall-following path.

2. The cleaning robot extrication method according to claim 1, further comprising:
determining whether the cleaned first surface medium region is behind the cleaning robot based on the generated regional map if the cleaned path is not the wall-following path; and
entering the special extrication mode if the cleaned first surface medium region is not behind the cleaning robot.

3. The cleaning robot extrication method according to claim 1 or 2, wherein the special extrication mode comprises:
controlling the cleaning robot to reverse based on either the wall-following path, or the cleaned path, or the cleaned first surface medium region;
making the cleaning robot rotate in place after the cleaning robot reverses a distance equivalent to at least half a length of a body of the cleaning robot; and
if the second surface medium region is detected in response to a surface medium change signal triggered by the surface medium sensor, controlling the cleaning robot to continue to reverse until the surface medium sensor detects no surface medium change signal.

4. The cleaning robot extrication method according to claim 3, further comprising:
controlling the cleaning robot to exit the special extrication mode when the surface medium sensor detects no surface medium change signal.

5. The cleaning robot extrication method according to any of claims 1 to 4, wherein the wall-following path is a path parallel to a surface of a wall when the cleaning robot cleans along the wall.

6. The cleaning robot extrication method according to claim 3 or 4, wherein an in-place rotation angle of the cleaning robot is 15-90 degrees.

7. The cleaning robot extrication method according to any of claims 1 to 6, wherein the surface medium change signal triggered by the surface medium sensor comprises:
controlling the surface medium sensor to emit a signal vertically towards a current surface, and receiving an actual echo signal reflected by the current surface; and
determining whether the actual echo signal is different from an echo signal of the first surface medium region, and if the actual echo signal is different from the echo signal of the first surface medium region, determining that a position of the surface medium sensor is already within the second surface medium region,
wherein the surface medium sensor is an ultrasonic sensor.

8. The cleaning robot extrication method according to any of claims 1 to 7, wherein the method is used when the cleaning robot is in a mode of only cleaning the first surface medium region.

9. A cleaning robot extrication device, arranged in a cleaning robot comprising a surface medium sensor, the device comprising:
an information recording module configured to record a cleaned path and generate a regional map when the cleaning robot cleans within a first surface medium region;
a path detecting module configured to detect whether the cleaned path is a wall-following path in an event that a second surface medium region is detected in response to a surface medium change signal triggered by the surface medium sensor when the cleaning robot encounters an obstacle and changes direction; and
a control module configured to control the cleaning robot to enter a special extrication mode if the cleaned path is the wall-following path.

10. A computer-readable storage medium having a computer program stored thereon, wherein the computer program implements the method according to any of claims 1 to 8 when executed by a processor.

11. An electronic apparatus, comprising:
a processor; and
a memory configured to store executable instructions of the processor;
wherein the processor is configured to execute the method according to any of claims 1 to 8 by executing the executable instructions.
